Europäisches Patentamt

European Patent Office

Office européen des brevets

(11) Publication number: 0 515 869 A2

# EUROPEAN PATENT APPLICATION

(21) Application number: 92107534.7

(51) Int. Cl.5: G06F 15/62

(22) Date of filing: 04.05.92

(30) Priority: 30.05.91 US 707518

(43) Date of publication of application:
02.12.92 Bulletin 92/49

(84) Designated Contracting States:
DE FR GB IT

(71) Applicant: LOGITECH INC
6505 Kaiser Drive
Fremont California 94555(US)

(72) Inventor: Nixon, Robert
34230 Heather Terrace
Fremont, California 94555(US)

(74) Representative: Reverdin, André Pierre
c/o Katzarov S.A. 19, Rue des Epinettes
CH-1227 Genève(CH)

(54) Apparatus and method for deskewing images.

(57) According to the present invention, apparatus and methods are provided for deskewing a variety of images, including vector and bitmap graphic images, as well as text images. In a method of the present invention, proper alignment of an image includes selecting a transformation mode; displaying a cursor; constructing a reference line; determining a rotation angle from the dx and dy of the reference line; and rotating the image by an amount equal to the rotation angle.

FIG. 2A

FIG. 2B

FIG. 2C

FIG. 2D

FIG. 2E

EP 0 515 869 A2

EP 0 515 869 A2

COPYRIGHT NOTICE

A portion of the disclosure of this patent document contains material which is subject to copyright protection. The copyright owner has no objection to the facsimile reproduction by anyone of the patent document or the patent disclosure as it appears in the patent and trademark office, patent file or records, but otherwise reserves all copyrights whatsoever.

BACKGROUND OF THE INVENTION

The present invention relates generally to the area of computer graphics and, more particularly, to positioning techniques for graphic images.

Computers have become a powerful tool for the rapid and economic creation of pictures, and are particularly well suited for drafting and publishing tasks. For drafting, computer-aided design or "CAD" has found wide application. Instead of pen and paper, the CAD user employs a computer with a pointing device (typically a mouse, light pen, digitizer tablet, or the like) to create an electronic description of a drawing in the computer's memory.

In publishing, desktop publishing or "DTP" has become the standard. In DTP, both text and graphic images are manipulated on a computer screen, much as they are in CAD. In either system, when the user is satisfied with the drawing, he or she obtains a "hard copy" by sending the stored image to an output device, such as a laser printer or plotter.

In working with graphic images, it is often desirable to "import" images which already exist into a computer. For example, a DTP user may wish to import a photograph into a newsletter. Before an image is available to the user, however, it must be converted to a format which the computer may interpret.

Thus, the process of importing images into a computer requires that an electronic description be generated. There are two basic approaches to describing images: bitmaps and vector objects. Vector objects are mathematical descriptions of an image. For example, a line may be described by its starting and ending points. A circle may be described by its center and radius.

Of particular interest to the present invention are bitmaps. In bitmaps, an image is described as a two dimensional array of bits or pixels (picture elements). By arranging combinations of black and white pixels (0 and 1 bits), an image may be reproduced. This is the technique commonly employed to reproduce images for newspapers and magazines. Bitmaps are almost always rectangular, and if the image itself is not rectangular, then the image must be rendered with a "mask" bitmap that defines the shape of the image.

While the bulk of a bitmap comprises the bits themselves, header information is also necessary to define how the bits are interpreted. This includes the height and width of the bitmap (expressed in number of pixels) and color information. In a monochromatic bitmap, one bit in the bitmap corresponds to one pixel on the display. A color bitmap requires multiple bits per pixel. In this case, the header information describes how the multiple bits correspond to particular colors. There are multiple file formats for storing bitmaps. Examples include ZSoft's PC Paintbrush (PCX), CompuServe's Graphics Interchange Format (GIF), and Microsoft's Tagged-Image File Format (TIFF).

Because bitmaps are used to store real-world images, they usually enter a computer through a scanner or a video frame grabber. A scanner converts a photographic image into a bitmapped data file, and a frame grabber converts a video signal (from a video camera or VCR) to a bitmapped data file. Bitmaps can also be created by hand using computer "paint" programs, such as Microsoft's Windows Paintbrush program.

Scanners, what are probably by far the most popular method for importing images, employ a light source and photodetectors to "read" images into a computer. Two basic types are available: flatbed and handheld. The operation of each will now be briefly described.

Flatbed scanners look and operate very much like an ordinary photocopier. First, the user places an image to be scanned upon the flatbed (flat glass). Next, the scanner is activated, e.g., by pressing a button. The image is then scanned by a light source. Instead of generating a photocopy, however, the scanner focuses the image onto photodetectors which produce binary data representative of the image. Upon completion of the scan, the data are stored on a computer disk as a binary file, typically in one of the aforementioned file formats. The data file is now available to the user for use in application software, such as desktop publishing packages or paint programs.

The operation of handheld scanners is slightly different. In these scanners, substantially all of the scanning system is housed within a single handheld unit. Instead of placing the image to be scanned on a glass surface, as one would do with a photocopier or flatbed scanner, the image is laid face up on a flat surface. The scanner, which includes a roller or wheels, is dragged across the surface of the image. The image is then recorded in a manner similar to that for flatbed systems.

2

While scanners allow for the easy importation of existing images, they have significant drawbacks. Most commonly, significant artifacts are introduced into an image when it is scanned. Perhaps the most difficult aspect in scanner use is obtaining a straight and accurate scan. Thus, the user must devote a significant, if not substantial, amount of time "cleaning up" the image. Typically, this includes editing the image, usually with a paint program, to erase artifacts and properly align the scanned image.

While prior systems exist to edit or otherwise manipulate bitmaps, they fail to provide an efficient means and method for realigning or "deskewing" scanned images. In particular, with prior systems the user must expend significant effort and time realigning skewed images. Thus, it is desirable to provide a system which aligns these images with minimum user effort. In particular, the method should require minimum input from the user--preferably with few keystrokes or "mouse clicks." The present invention fulfills this and other needs.

## SUMMARY OF THE INVENTION

Computers have found wide application for the creation and editing of drawings or graphic images. A particularly easy technique for creating images is to scan a drawing into a computer using one of the commercially available scanners. Because of artifacts which are introduced during scanning, however, prior art systems have required the computer user to expend significant effort and time editing scanned images, including realigning "skewed" images.

According to the present invention, therefore, a method for aligning a graphic image displayed on a computer system comprises selecting a mode for aligning the image; displaying a cursor to indicate a location and said mode; constructing a reference line with said cursor, said reference line having an axis substantially parallel to an element of the graphic image; determining a rotation angle from the dx and dy of said reference line; and rotating the graphic image by an amount equal to said rotation angle.

A system for processing graphic images, constructed in accordance with the principles of the present invention, includes a computer having a memory and a processor; a scanner for capturing images; alignment means for drawing a reference line parallel to an element of the captured image; means for determining dx and dy from the line; means for determining an angle from the dx and dy; means for rotating the image by an amount equal to the angle; and a display for displaying the rotated image.

## BRIEF DESCRIPTION OF THE DRAWINGS

Fig. 1A is a block diagram of a computer system in which the present invention may be embodied.
Fig. 1B represents a display window of the present invention for manipulating images.
Figs. 2A-E illustrate the deskewing of a bitmapped graphic image.
Figs. 3A-E illustrate the deskewing of a bitmapped text image.
Fig. 4 is a flow chart of the deskew method of the present invention.
Fig. 5 is a flow chart of the deskew rubber band method of the present invention.

## DESCRIPTION OF THE PREFERRED EMBODIMENT

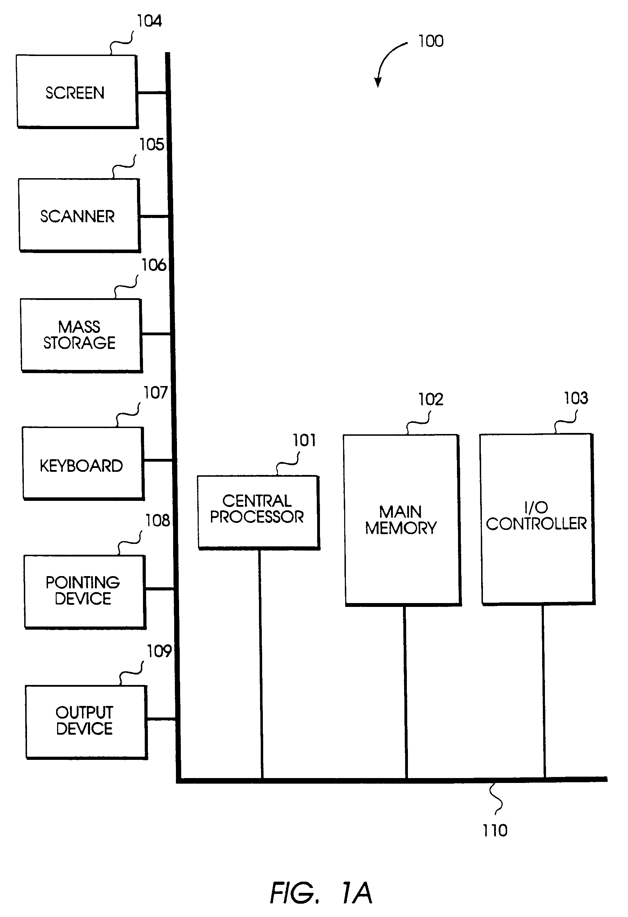

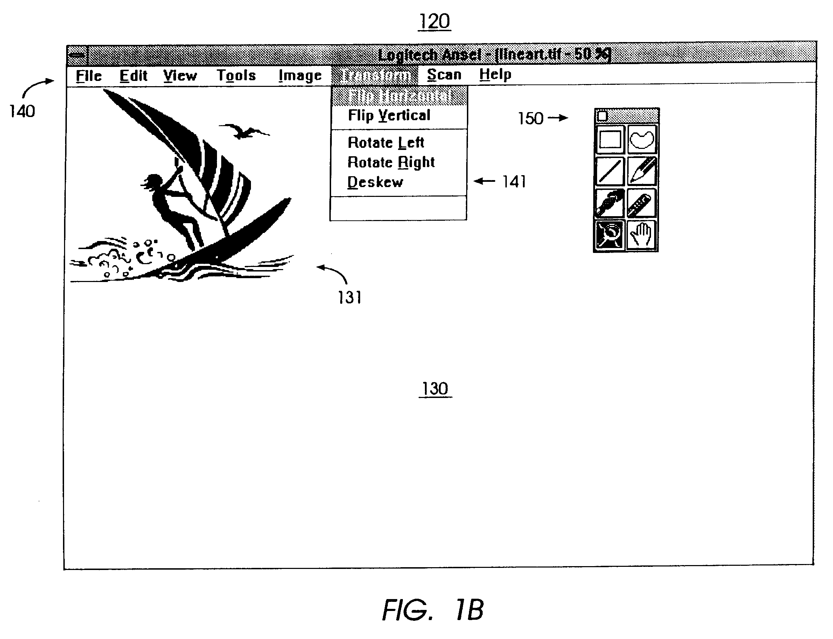

The invention may be embodied on a computer system such as the system 100 of Fig. 1, which comprises a central processor 101, a main memory 102, an I/O controller 103, a screen or display 104, a scanner 105, a mass storage device 106, a keyboard 107, a pointing device 108, and an output device 109. The various components of the system 100 communicate through a system bus 110 or similar architecture.

In operation, the user enters commands through keyboard 107 and/or pointing device 108, which may be a mouse, a track ball, a digitizing tablet, or the like. The computer displays graphic images and other data through screen 104, such as a cathode ray tube. A hard copy of the image may be obtained from output device 109, which is typically a printer or a plotter. In a preferred embodiment, an appropriately programmed IBM PC-compatible personal computer (available from International Business Machines, Corp. of Armonk, NY) is used running under MS-DOS and Windows (available from Microsoft, Corp. of Redmond, WA).

In this interactive computer system, the user imports graphic images with the scanner 105 which may be either a flatbed or handheld scanner (several modes are available from Logitech Corp., Fremont, California). Once imported into the computer 100, an image is stored as a bitmapped graphic and, thus, may be represented in the computer's memory 102.

Referring now to Fig. 1B, the system 100 provides a window or work space 120 for display on screen 104. Window 120 is a rectangular, graphical user interface for viewing and manipulating graphic images.

Window 120 contains a plurality of menus 140, 150, each having submenus and software tools for use on graphic images. Of particular interest to the present invention is the Deskew tool 141, which is available from menu 140. Window 120 also includes a client area 130 for displaying images, such as the bitmapped graphic image 131. The operations of window 120, and the Deskew tool 141 in particular, are best described by the following examples.

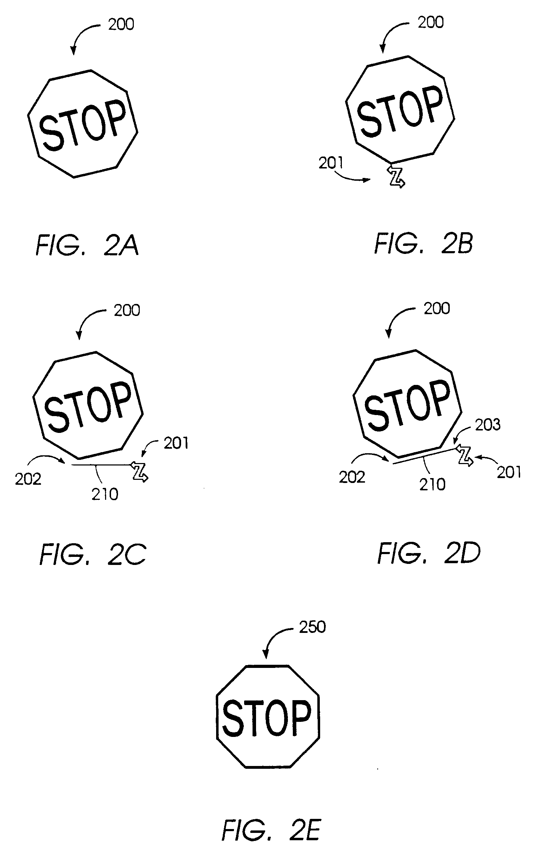

Referring to Figs. 2A-E, the deskewing or realignment of a graphic image will now be illustrated. In Fig. 2A, a graphic image 200, such as a bitmap of an ordinary stop sign, is displayed. Typically, the graphic image has entered the computer via scanner 105. As shown, however, image 200 is misaligned, i.e., it is skewed relative to its normal horizontal and vertical orientation. While there are several potential sources of this artifact, probably the most common cause of the skewed image is misalignment between the scanner 105 and the source material during a scan operation.

The anomaly is corrected as follows. The user enters a Deskew mode, for example, by selecting the Deskew option 141 from the menu 140 of Fig. 1B. In response, the system displays a Deskew cursor 201, as illustrated in Fig. 2B. Next, the user is to draw a "reference line" which matches a linear element on the graphic image 200. Typically, this will be an edge or similar linear attribute.

The reference line is drawn as follows. In Fig. 2C, the user places a starting point 202 at a first location, for example, by "clicking" or actuating a mouse button. This point represents the starting point for the reference line to be drawn. While the mouse button is still depressed, the cursor 201 is moved away ("dragged") from starting point 202 so as to define a reference line. While the mouse button is still depressed, a temporary or "rubberbanding" line 210 is displayed, thereby providing the user with visual feedback of the orientation of the cursor to the starting point. As shown, cursor 201 has initially moved away from the starting point in a horizontal direction, however, cursor 201 may move in any direction away from the starting point.

Rubberbanding technique, a form of positioning feedback, is known in the art. When drawing a line, a user specifies two endpoints. As the user moves from the first endpoint (starting point) to the second (ending point), a temporary or "in transit" line is displayed from the first endpoint to the current cursor position; thus the user can see the lie of the line before he finishes positioning. On the computer screen, the effect is that of an elastic or "rubberband" line stretched between the first endpoint and the cursor. For an introduction to rubberbanding, See, Newman, W., *Principles of Interactive Computer Graphics: Computer Science Series,* Second Edition, McGraw Hill, 1979.

In Fig. 2D, the user has moved cursor 201 to an ending point 203. As shown, rubberbanding line 210 indicates that the line (defined by starting point 202 and ending point 203) is parallel to an edge of the graphic image 200. Upon releasing the depressed mouse button, the ending point 203 is accepted as the second point for the reference line. With these two data points entered, system 100 deskews and redisplays the image 200 as a deskewed image 250, as shown in Fig. 2E.

The absolute position of the line 210 is not important. Instead, only its relative angle is important. Specifically, the angle is measured from the dx and dy of the line; the image is rotated by a complementary angle. Effectively, the corresponding image line (element of the image used for alignment) and everything parallel to it are rotated to effect alignment. If the image line (and hence reference line drawn) is more vertical than horizontal, i.e., in the range of 45° to 135° or 225° to 315°, the image will be rotated to make the line vertical. On the other hand, if the image line is more horizontal, the image will be rotated to make the line horizontal.

In addition to deskewing drawings, the methods of the present invention also have other applications. For example, optical character recognition (OCR)--a technique for rapidly converting textual material into computer data files--requires scanned images of text to be relatively free from artifact, particularly misalignment. If the textual image is skewed, the OCR system is not able to recognize the individual characters of the text. Thus, it is desirable to deskew scanned text which is misaligned.

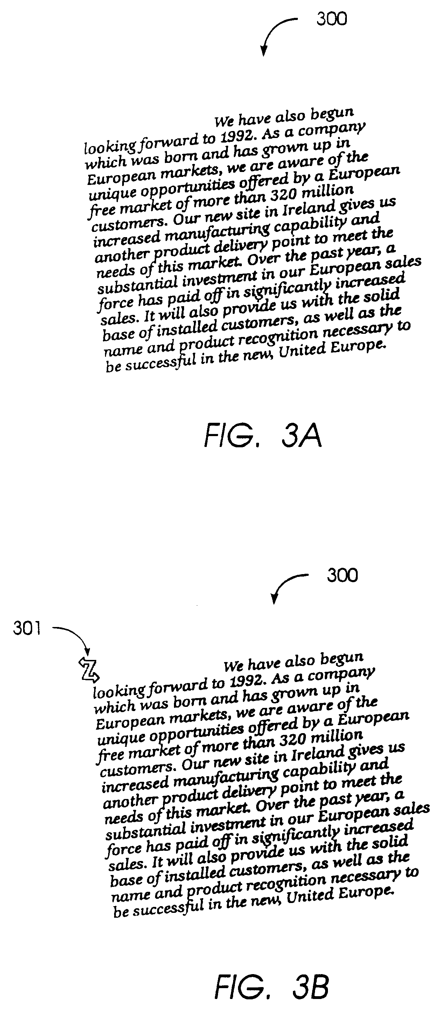

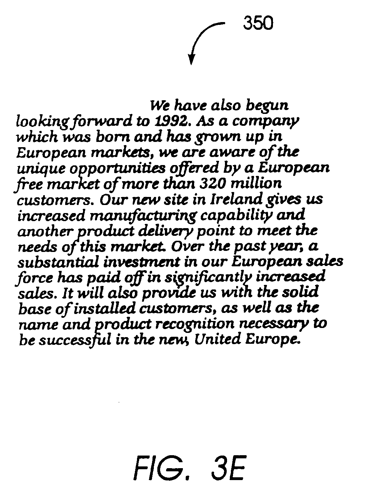

Referring now to Figs. 3A-E, a method of deskewing text will be illustrated. In Fig. 3A, there is shown a block of text 300 which is misaligned, i.e., skewed. Text 300 will have typically entered the computer through scanner 105. The Deskew tool or option 141 is chosen from the menu 140; the system enters the Deskew mode. In response, the system 100 displays the Deskew cursor 301, as shown in Fig. 3B.

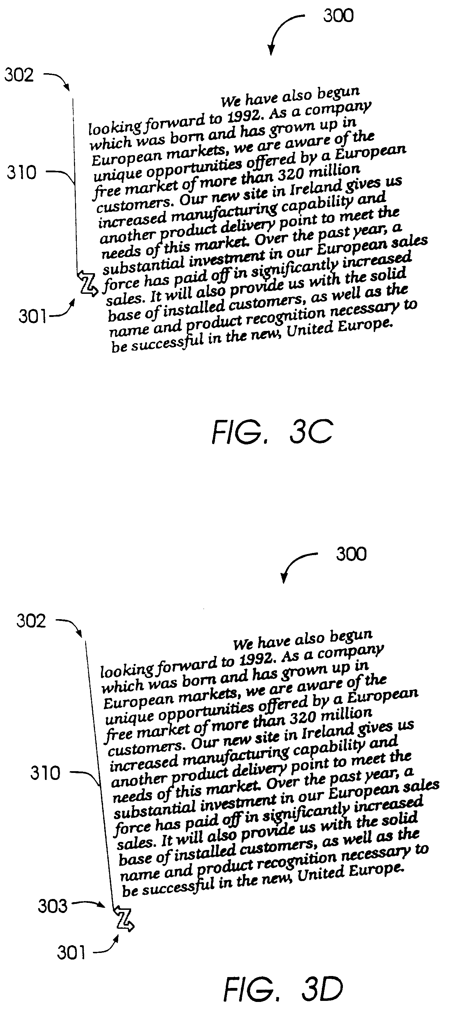

As before, deskewing is performed by drawing a reference line parallel to a corresponding element on the image. Since the text 300 resembles a block or rectangle, a line may be conveniently drawn parallel to one edge of the block. Thus, in Fig. 3C, a starting point 302 is placed at a first location proximate the text 300. Typically, this is performed by the user clicking a mouse button (device 108). While the button is still depressed, the mouse is moved or dragged away from the starting point 302. In response, system 100 displays a temporary or rubberbanding line 310. Rubberbanding line 310 provides constant visual feedback between the starting point 302 and the location of cursor 301 (as previously described hereinabove). While the initial movement of cursor 301 (and orientation of the temporary line) is shown as a vertical line, the cursor is in fact free to move in any direction away from the starting point in order to define a reference line.

Once satisfied with the alignment of rubberbanding line 310, the user releases the mouse button to place an ending point 303 at a second location, as shown in Fig. 3D. In response, the system 100 accepts starting point 302 and ending point 303 as the endpoints defining the reference line. Next, the text 300 is deskewed, i.e., rotated by an angle corresponding to the angle of the reference line. Upon completion of the rotation, the deskewed text 350 is displayed on screen 104.

Also at this point, the text may be processed by optical character recognition (OCR) techniques, as is known in the art. In this case, the deskewed text 350 is supplied, e.g., as a deskewed bitmap, to OCR software. Since the text has been restored to a normal alignment, OCR software may readily recognize individual characters of the text by matching the scanned characters with stored character templates (which themselves are stored only in normal alignment). Upon recognition, the text is converted into a text file, e.g., an ASCII text file--a well known file format. Once converted, the text may be stored on the computer (e.g., storage 106) and/or otherwise processed (e.g., by a word processor).

The internal processes of the system 100 will now be described in detail. The operation of deskewing is performed by two methods or routines: the Deskew routine and the DeskewRubberband routine. Each of these will now be described in turn.

The Deskew routine is the top level routine for the Deskew tool 141. The routine is invoked by the Window's message dispatcher when a mouse button is depressed in the Deskew mode. The dispatching of messages in an event-based system, such as Windows, is known in the art; see, e.g., Petzold, C., *Programming Windows,* Second Edition, Microsoft Press, 1990, the disclosure of which is hereby incorporated by reference. Upon invocation, the routine is passed a handle to the current image and the x, y coordinates of the mouse cursor when the mouse button is depressed (starting point).

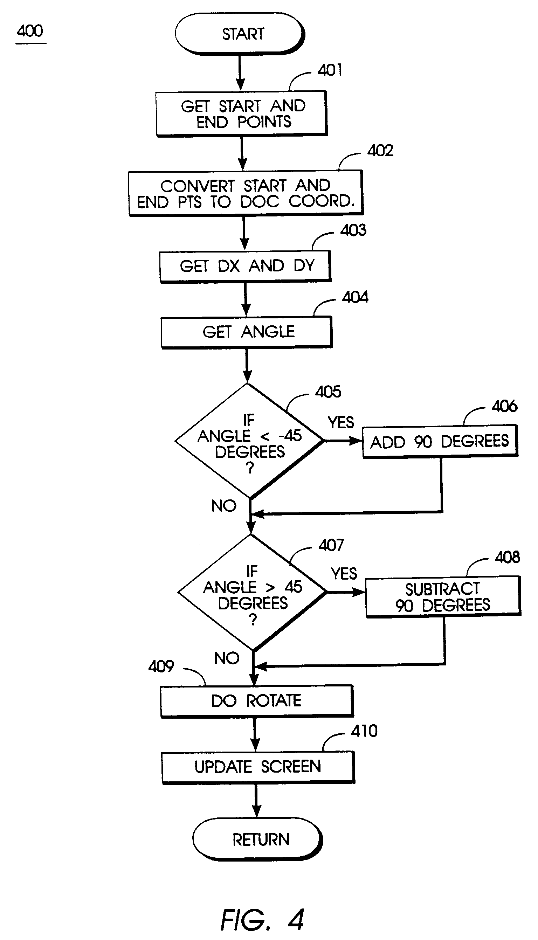

Referring now to Fig. 4, the steps of the Deskew routine 400 are illustrated by a flow chart. In step 401, the DeskewRubberband routine is called to get the starting and ending points of the reference line. The DeskewRubberband routine (described in more detail hereinbelow) receives the x, y screen coordinates where the mouse button was first depressed (starting point), and returns the x, y coordinates where the mouse button is released (ending point). In step 402, the two sets of coordinates (starting and ending points) defining the reference line are converted from screen to document coordinates.

The conversion from screen to document coordinates is dependent upon the current zoom factor and view offset employed. The document (e.g., image 131) may be displayed at any one of a number of zoom factors, and the display surface 130 may be "panned" (moved in virtual space) to show any part of the document. Thus, a screen coordinate of 0,0 (referencing the top left corner of the window) does not necessarily represent the top left of the document. The conversion from screen to document coordinates is effected by the following equation:

$$docCoord = (screenCoord / zoomFactor) + offset;$$

where docCoord is the document coordinates, screenCoord is the screen coordinates, zoomFactor is the current magnification (e.g., 2X), and offset is the document coordinate of the pixel displayed at the top left corner. docCoord, screenCoord, and offset each has horizontal (x) and vertical (y) components. In step 403, the dx and dy are determined. This may be determined by finding the width (dx) and the height (dy) of an imaginary rectangle that completely encloses the line:

$$dx = end.x - start.x, \text{ and}$$
$$dy = end.y - start.y;$$

where start.x and end.x are the x or horizontal coordinate, and start.y and end.y are the y or vertical coordinate. In step 404, a rotation angle (rotateAngle) is determined from the reference line, as follows:

$$rotateAngle = 90° - \text{angle of line};$$
$$rotateAngle = 90° - ARC\ TAN\ (dy/dx);$$
$$rotateAngle = ARC\ TAN\ (dx/dy).$$

In steps 405-408, the orientation of the reference line relative to horizontal or vertical is determined. In step 405, if the rotation angle is less than -45°, then in step 406 90° is added. Otherwise (no at step 405), step 406 is skipped. In step 407, if the rotation angle is greater than 45°, then 90° is subtracted from the angle at step 408. Otherwise (no at step 407), step 408 is skipped. This ensures that the rotation angle, i.e., the angle that the image is rotated through, is both greater than or equal to -45° and less than or equal to 45°.

In step 409, the image is rotated about its center point by the angle computed from the foregoing steps (rotateAngle). The rotation of 2D and 3D images is known in the art; see, e.g., Newman, W., *Principles of Interactive Computer Graphics*: *Computer Science Series,* Second Edition, McGraw Hill, 1979, the disclosure of which is hereby incorporated by reference. In step 410, the screen 104 is updated with the new deskewed image. The routine concludes by returning.

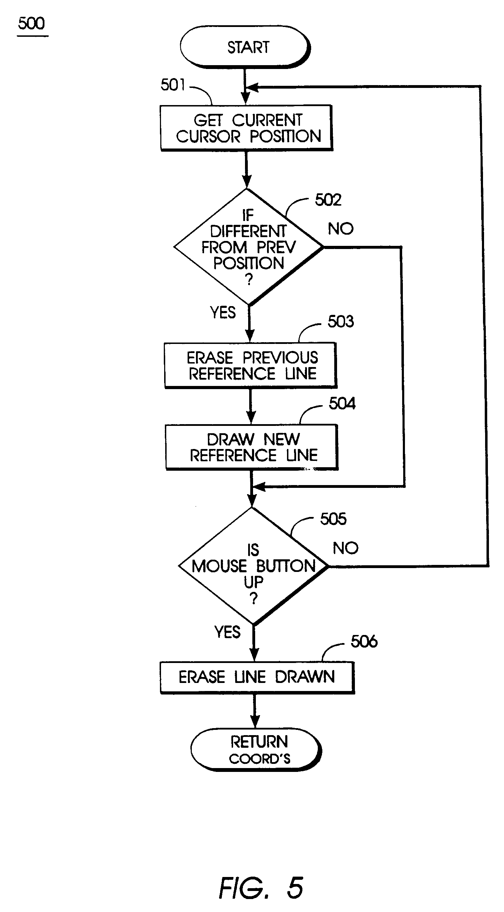

Referring now to Fig. 5, the steps of the DeskewRubberband routine 500 are illustrated with a flow chart. In general, the routine tracks the cursor as it moves across screen 104 until the mouse button is released (button up). Whenever the cursor is moved, the routine draws a reference line on the screen from the point at which the button was pressed down (starting point) to the current cursor position (ending point). Exclusive-OR (XOR) drawing techniques, which are known in the art, are employed for easy erasure. The method is continued until the mouse button is released (button up), whereupon the routine erases the last drawn line and returns the coordinates of the current cursor position.

Thus, the steps of the routine are as follows. In step 501, the routine gets the current cursor position (starting point), which is where the user first depressed the mouse button. In step 502, if the current cursor position is different from a previous cursor position (if any), then in step 503 any previous drawn reference line is erased and in step 504 a new reference line is drawn. If the current cursor position is not different from a previous position (no at step 502), then steps 503 and 504 are skipped. If the mouse button is released in step 505 (button up message from Windows), then in step 506 the previously drawn reference line is erased and in step 507 the current coordinates are returned. Otherwise (no at step 505), the routine loops to step 501 to get a new current cursor position.

Attached hereto is an Appendix containing source code listings providing a description of the invention suitable for use in a general purpose digital computer system, such as an IBM-compatible personal computer.

While the invention is described in some detail with specific reference to a single preferred embodiment and certain alternatives, there is no intent to limit the invention to that particular embodiment or those specific alternatives. While specific examples have been shown using monochromatic bitmapped graphic images, for example, it will be apparent to those skilled in the art to apply the teachings of the present invention to other formats, including color bitmapped images, vector images, and the like. Therefore, the true scope of the invention is defined not by the foregoing description but by the following claims.

APPENDIX

```
/******************************************************************
 *
 *
 * Module: DESKEW.C
 *
 * Deskew routines
 *
 * Copyright (C) 1990 Logitech, Inc.
 *
 ******************************************************************
 /


#include <math.h>
#include "sys.h"
#include "imgtype.h"
#include "deskew.h"
#include "document.h"
#include "fillrgn.h"
#include "image.h"
#include "imm.h"
#include "keydef.h"
#include "menuid.h"
#include "pmdmisc.h"
#include "pmdraw.h"
#include "pmerror.h"
#include "pmmouse.h"
#include "pmpanel.h"
#include "selutl.h"
#include "stringid.h"
#include "undo.h"
#include "xlate.h"



#define PI 3.14159265
#define ABORT (ABORTBUTTON ¦ HAND_MODIF ¦ MAGNIFIER_MODIF ¦ ABORT_KEY)



// local routines
static SUCCESS DeskewRubberBand(HWND, POINTC, MPPOINTC, MPPOINTC);
static SUCCESS DeskewBilevel(HWND, HIMMIMG, HIMMIMG, SIZE, double, SHADE);
static SUCCESS DeskewGrayscale(HWND, HIMMIMG, HIMMIMG, SIZE, double, SHADE);



#define MINDIMENSION 5
#define ABS(a) ((a) > 0 ? (a) : (-(a)))
```

7

```
SUCCESS Deskew(HDOC hDoc, HFLSEL hFlSel, POINTC first)
// top level routine for deskew; called by mouse dispatcher, mouse
// button is pressed down when this routine is entered; track
// mouse movement until button release then figure out angle and
// call rotation algorithms
{
    BOOL success, extraClone = FALSE;
    POINTC screenStart, screenEnd;
    POINTC docStart, docEnd;
    HIMG hActiveImage;
    HIMMIMG hSourceImmImg;
    double angle;

    // let user define position of line
    success = DeskewRubberBand(hDoc->hwndDoc, first, &screenStart,
                                &screenEnd);

    // handle return status
    if (!success)
        return success; // operation aborted

    // deal with single click
    if (ABS(screenStart.x - screenEnd.x) <= MINDIMENSION &&
        ABS(screenStart.y - screenEnd.y) <= MINDIMENSION) {
        return TRUE;
    }

    // prepare for undo
    UndoSave(hDoc, hFlSel, IDM_DESKEW);

    // set the cursor to hourglass
    PanelSetWaitCursor(TRUE);

    // convert from screen to document coordinates
    docStart.x = XlatecW2D(hDoc->currView.zoomFactor, screenStart.x);
    docStart.y = XlatecW2D(hDoc->currView.zoomFactor, screenStart.y);
    docEnd.x = XlatecW2D(hDoc->currView.zoomFactor, screenEnd.x);
    docEnd.y = XlatecW2D(hDoc->currView.zoomFactor, screenEnd.y);

    // find angle to rotate through
    if (docStart.y == docEnd.y)
        angle = 0.0; // line is vertical
    else
        angle = atan((float)(docEnd.x - docStart.x) /
                        (float)(docEnd.y - docStart.y));
```

8

```
// angle is from user's line to nearest vertical or horizontal
if (angle > PI / 4.0) // can't be more than 45 degrees
    angle -= PI / 2.0;
if (angle < -PI / 4.0) // or less than -45 degrees
    angle += PI / 2.0;


// is there a selection to rotate, or just the base document
if (hFlSel->img.mask.status == MS_SEL) {
    hActiveImage = &hFlSel->img;
    if (hFlSel->img.hImmImg == NULL) { // if selection is not floating
        SelDetach(hDoc, hFlSel, TRUE); // detach it
        PanelDetachFlotingSelWnd(); // update display
        extraClone = TRUE;
    }
}
else
    hActiveImage = &hDoc->img;


// save the source imm image for the rotation algorithms
hSourceImmImg = hActiveImage->hImmImg;


// replace the existing imm image with a new one of the same size,
// leaving the mask intact
success = ImgCloneData(hActiveImage, "Deskew");


// is the imm image bilevel or grayscale ?
if (hActiveImage->bitsPerSample == 1)
    success = DeskewBilevel(hDoc->hwndDoc, hSourceImmImg,
                            hActiveImage->hImmImg, hActiveImage->size,
                            angle, hActiveImage->backgroundColor);
else
    success = DeskewGrayscale(hDoc->hwndDoc, hSourceImmImg,
                              hActiveImage->hImmImg, hActiveImage->size,
                              angle, hActiveImage->backgroundColor);


// destroy source image
if (extraClone) ImgImmClose (hSourceImmImg, "Deskew");


if (!success) {
    UndoCancel(hDoc, hFlSel);
    return FALSE;
}


// update the display
if (hFlSel->img.mask.status == MS_NONE)
    PanelUpdateDocument(TRUE);
```

9

```
    else {
        PanelLinkFlotingSelWnd(hFlSel);
        PanelDetachFlotingSelWnd();
    }

    return success;
} // Deskew


static SUCCESS DeskewRubberBand(HWND hwnd, POINTC first, MPPOINTC pStart,
                                MPPOINTC pEnd)
// update line on screen while user mouses around; return when
// left button is released; return FALSE if abort
{
    POINTC oldEnd;
    USHORT keyState;

    MouseCapture(hwnd, TRUE);
    *pStart = oldEnd = first;
    DrawLine(hwnd, *pStart, oldEnd);
    while (((keyState = MouseGetNextEvent(pEnd)) & LBUTTON) &&
            !(keyState & ABORT)) {

        // redraw line only if it has changed
        if ((pEnd->x != oldEnd.x) || (pEnd->y != oldEnd.y)) {
            DrawLine(hwnd, *pStart, oldEnd); // delete old line
            DrawLine(hwnd, *pStart, *pEnd); // draw new line
            oldEnd = *pEnd;
        }
    }
    MouseCapture(hwnd, FALSE);
    DrawLine(hwnd, *pStart, oldEnd); // delete old line
    if (keyState & ABORT)
        return FALSE;
    else
        return TRUE;
} // DeskewRubberBand


static SUCCESS DeskewBilevel(HWND hWnd, HIMMIMG hSource, HIMMIMG hDest,
                             SIZE size, double angle, SHADE background)
// rotate the bilevel image through the given angle; use back rotation
// and choose nearest neighbor
{
    LONG lSine, lCosine, backX, backY, firstBackX, firstBackY;
    POINTC p, source, mid;
```

```
        double sine, cosine;
        IMM_PORT sourcePort, destPort;
        PSHADE pSourceRow, pDestRow;
        BOOL percentOn, abort = FALSE;

        // find angle, sine and cosine for back rotation
        angle = -angle;
        sine = sin(angle);
        cosine = cos(angle);

        // use integers for greater speed
        lSine = (LONG)(sine * 65536);
        lCosine = (LONG)(cosine * 65536);

        // open the ports for access to the imm images
        IMM_ReadPort(&sourcePort, hSource);
        IMM_WritePort(&destPort, hDest);

        // find the mid point of the area to be rotated
        mid.x = size.x >> 1;
        mid.y = size.y >> 1;

        // initialize constants for back rotation; find the pixel that
        // rotates to the lower left corner of the destination bounding box
        firstBackX = (LONG)(((float)-mid.x * cosine - (float)-mid.y * sine +
    0.5)
                                  * 65536);
        firstBackY = (LONG)(((float)-mid.x * sine + (float)-mid.y * cosine +
    0.5)
                                  * 65536);

        // display percent complete dialog if image is big
        if (size.y > 200) {
            percentOn = TRUE;
            PercentDlg(hWnd, MAKEINTRESOURCE(IDM_DESKEW));
        }
        else
            percentOn = FALSE;

        // loop over the bounding box of the rotated rectangle; for each pixel,
        // determine which source pixel rotated to it by using back rotation;
        // if the source pixel is not inside the original rectangle, clip it
        for (p.y = 0; p.y < size.y; p.y++) {

            // if percent complete box is on, update it
            if (percentOn) {
```

```
        if (abort = PercentSet((SHORT)(100L * (LONG)(p.y) /
                                 (LONG)(size.y)), NULL))
            break;
    }


    // restore back rotation constants
    backX = firstBackX;
    backY = firstBackY;


    // get destination imm image row
    if (!(pDestRow = IMM_GetRow(&destPort, p.y))) break;


    for (p.x = 0; p.x < size.x; p.x++) {

        // back rotate and convert to source coordinate system
        source.x = (COORD)(backX >> 16) + mid.x;
        source.y = (COORD)(backY >> 16) + mid.y;


        // check for clipping, copy shade to row buffer
        if (source.x < 0 || source.x >= size.x ||
            source.y < 0 || source.y >= size.y)

            // outside source rectangle
            pDestRow[p.x / 8] |= (background & 1) << (7 - (p.x % 8));

        else {

            if (!(pSourceRow=(PSHADE)IMM_GetRow(&sourcePort,source.y)))
                break;
            pDestRow[p.x / 8] = (pDestRow[p.x / 8] &
                                 (0xFF - (1 << (7 - (p.x % 8))))) |
                                 (((pSourceRow[source.x / 8] >>
                              (7 - (source.x % 8))) & 1) << (7 - (p.x %
8)));

        }


        // prepare for next x coordinate
        backX += lCosine;
        backY += lSine;
    }

    // prepare for next row
    firstBackX -= lSine;
    firstBackY += lCosine;
}
```

12

```
        // release the imm ports
        IMM_ReleasePort(&sourcePort);
        IMM_ReleasePort(&destPort);

        // if percent complete dialog is on, update it
        if (percentOn) {
            PercentSet(100, NULL);
        }

        if (p.y < size.y) {
            if (!abort) ErrorDlgBox(AS_OK, IS_HAND, EN_OUTOFMEMORY);
            return FALSE;
        }
        return TRUE;
} // DeskewBilevel


static SUCCESS DeskewGrayscale(HWND hWnd, HIMMIMG hSource, HIMMIMG hDest,
                               SIZE size, double angle, SHADE background)
// rotate the grayscale image through the given angle; use back rotation
// and bilinear interpolation
{
    LONG lSine, lCosine, backX, backY, firstBackX, firstBackY;
    POINTC p, source, mid;
    COORD nexty;
    double sine, cosine;
    IMM_PORT sourcePort1, sourcePort2, destPort;
    PSHADE pSourceRow1, pSourceRow2, pDestRow;
    SHORT interpolateX, interpolateY;
    SHORT val1, val2;
    BOOL percentOn, abort = FALSE;

    // find angle, sine and cosine for back rotation
    angle = -angle;
    sine = sin(angle);
    cosine = cos(angle);

    // use integers for greater speed
    lSine = (LONG)(sine * 65536);
    lCosine = (LONG)(cosine * 65536);

    // open the ports for access to the imm images
    IMM_ReadPort(&sourcePort1, hSource);
    IMM_ReadPort(&sourcePort2, hSource);
    IMM_WritePort(&destPort, hDest);
```

```
// find the mid point of the area to be rotated
mid.x = size.x >> 1;
mid.y = size.y >> 1;

// initialize constants for back rotation; find the pixel that
// rotates to the lower left corner of the destination bounding box
firstBackX = (LONG)(((float)-mid.x * cosine - (float)-mid.y * sine +
0.5)
                        * 65536);
firstBackY = (LONG)(((float)-mid.x * sine + (float)-mid.y * cosine +
0.5)
                        * 65536);

// display percent complete dialog if image is big
if (size.y > 100) {
    percentOn = TRUE;
    PercentDlg(hWnd, MAKEINTRESOURCE(IDM_DESKEW));
}
else
    percentOn = FALSE;

// loop over the bounding box of the rotated rectangle; for each pixel,
// determine which source pixel rotated to it by using back rotation;
// if the source pixel is not inside the original rectangle, clip it
for (p.y = 0; p.y < size.y; p.y++) {

    // if percent complete box is on, update it
    if (percentOn) {
        if (abort = PercentSet((SHORT)(100L * (LONG)(p.y) /
                                (LONG)(size.y)), NULL))
            break;
    }

    // restore back rotation constants
    backX = firstBackX;
    backY = firstBackY;

    // get destination imm image row
    if (!(pDestRow = IMM_GetRow(&destPort, p.y))) break;

    nexty = source.y = (COORD)(backY >> 16) + mid.y;
    if (source.y >= 0 && source.y < size.y-1) {
        if (!(pSourceRow1 = IMM_GetRow(&sourcePort1, source.y))
           || !(pSourceRow2 = IMM_GetRow(&sourcePort2, source.y + 1)))
            break;
    }
```

14

```
interpolateY = (SHORT)(backY >> 8) & 0xFF;

for (p.x = 0; p.x < size.x; p.x++) {

    // back rotate and convert to source coordinate system
    source.x = (COORD)(backX >> 16) + mid.x;

    // check for clipping, copy shade to row buffer
    if (source.x < 0 || source.x >= size.x - 1 ||
        source.y < 0 || source.y >= size.y - 1)

        // outside source rectangle
        pDestRow[p.x] = background;

    else {

        interpolateX = (SHORT)(backX >> 8) & 0xFF;
        val1 = (pSourceRow1[source.x] * (256 - interpolateX) +
                pSourceRow1[source.x + 1] * interpolateX) >> 8;
        val2 = (pSourceRow2[source.x] * (256 - interpolateX) +
                pSourceRow2[source.x + 1] * interpolateX) >> 8;
        pDestRow[p.x] = (SHADE)((val1 * (256 - interpolateY) +
                                 val2 * interpolateY) >> 8);
    }

    // prepare for next x coordinate
    backX += lCosine;
    backY += lSine;
    interpolateY = (SHORT)(backY >> 8) & 0xFF;
    nexty = (COORD)(backY >> 16) + mid.y;
    if (nexty != source.y) {
        source.y = nexty;
        if (source.y >= 0 && source.y < size.y-1) {
            if (!(pSourceRow1 = IMM_InlineGetRow(&sourcePort1,
source.y))
                || !(pSourceRow2 = IMM_InlineGetRow(&sourcePort2,
source.y+1)))
                    break;
        }
    }
}

// prepare for next row
firstBackX -= lSine;
firstBackY += lCosine;
}
```

```
        // release the imm ports
        IMM_ReleasePort(&sourcePort1);
        IMM_ReleasePort(&sourcePort2);
        IMM_ReleasePort(&destPort);

        // if percent complete dialog is on, update it
        if (percentOn) {
            PercentSet(100, NULL);
        }

        if (p.y < size.y) {
            if (!abort) ErrorDlgBox(AS_OK, IS_HAND, EN_OUTOFMEMORY);
            return FALSE;
        }
        return TRUE;
    } // DeskewGrayscale
```

## Claims

1. A method for aligning a graphic image displayed on a computer system, comprising the steps of:
   (a) selecting a mode for aligning the image;
   (b) displaying a cursor to indicate a location;
   (c) constructing a reference line with said cursor, said reference line having an axis substantially parallel to an element of the graphic image;
   (d) determining a rotation angle from said reference line; and
   (e) rotating the graphic image by an amount equal to said rotation angle.

2. The method of claim 1, wherein said mode is a transformation mode.

3. The method of claim 1, wherein step (c) comprises:
   selecting a first point proximate the graphic image;
   displaying a temporary reference line from said first point to a current cursor position; and
   selecting a second point proximate the graphic image, wherein said second point is not equal to said first point, and wherein said first and second points define a reference line substantially parallel to an element of the graphic image.

4. The method of claim 1, wherein step (c) comprises:
   depressing a mouse button at a starting point;
   if said starting point is different from a previous point, erasing a previous temporary line;
   displaying a new temporary line from said starting point to a current position; and
   if the mouse button has been released, erasing said displayed temporary line and returning a reference line defined by said starting point and the current position as an ending point.

5. The method of claim 1, wherein step (d) includes: determining a rotation angle from dx and dy of the reference line.

6. The method of claim 5, wherein said rotation angle determining step includes:
   determining the rotation angle, from a width (dx) and a height (dy) of an imaginary rectangle that would completely enclose the reference line, using the following equation:

   dx = end.x - start.y; and

16

dy = end.y - start.y;

wherein end.y is a horizontal coordinate for the ending point and end.y is a vertical coordinate for the ending point, and start.x is a horizontal coordinate for the starting point and start.y is a vertical coordinate for the starting point.

7. The method of claim 5, wherein said rotation angle determining step comprises:
   determining a rotation angle (rotateAngle) from the equation:

rotateAngle = *ARC TAN* (dx/dy).

8. The method of claim 5, wherein step (d) further comprises:
   if the rotation angle is greater than 45°, subtracting 90° from the rotation angle; and
   if the rotation angle is less than -45°, adding 90° to the rotation angle.

9. The method of claim 1, further comprising:
   displaying said rotated image on the screen.

10. A system for processing graphic images comprising:
    a computer having a memory and a processor;
    a scanner, coupled to the computer, for capturing an image;
    alignment means, operably coupled to the processor, for drawing a reference line parallel to an element of the captured image;
    means, operably coupled to the processor, for determining dx and dy from the line;
    means, operably coupled to the processor, for determining an angle from the dx and dy;
    means, operably coupled to the processor, for rotating the image by an amount equal to the angle; and
    a display, coupled to the computer, for displaying the rotated image.

11. The system of claim 10, wherein said captured image is a vector image.

12. The system of claim 10, wherein said captured image is a bitmapped image.

13. The system of claim 10, wherein said captured image comprises text.

14. The system of claim 13, further comprising optical character recognition means, stored in the memory and operably coupled to the processor, for converting said text into a computer text file.

15. In a system for scanning graphic images into a computer, the improvement comprising:
    means, coupled to the computer, for constructing a reference line substantially parallel to a skewed element of the graphic image;
    means, coupled to the computer, for determining a rotation angle from said reference line; and
    means, coupled to the computer, for rotating the graphic image by an amount equal to said rotation angle.

16. The system of claim 15, wherein said constructing means includes:
    means, coupled to the computer, for displaying the graphic image and starting and ending points of the reference line.

17. In an optical character recognition system, said system including a scanner for importing a block of text and a computer for recognizing the block of text as a sequence of characters, the improvement comprising:
    means, coupled to the computer, for constructing a reference line substantially parallel to one edge of the block of text;
    means, coupled to the computer, for determining a rotation angle from said reference line; and
    means, coupled to the computer, for rotating the block of text by an amount equal to said rotation angle.

18. A method for aligning a graphic image displayed on a computer system, comprising the steps of:
    (a) selecting a first point proximate the graphic image;
    (b) selecting a second point, wherein said first point and said second point define a line substantially parallel to a desired alignment direction;
    (c) determining a rotation angle from said line; and
    (d) rotating the graphic image by an amount equal to said rotation angle.

19. The method of claim 18, wherein step (a) includes generating a first signal from a pointing device, and wherein step (b) includes generating a second signal from the pointing device.

20. The method of claim 18, wherein step (d) comprises:
    if said line is more vertical than horizontal, rotating the graphic image in a vertical direction by an amount equal to said rotation angle; and
    if said line is more horizontal than vertical, rotating the graphic image in a horizontal direction by an amount equal to said rotation angle.

FIG. 1A

FIG. 1B

FIG. 2A

FIG. 2B

FIG. 2C

FIG. 2D

FIG. 2E

300

We have also begun looking forward to 1992. As a company which was born and has grown up in European markets, we are aware of the unique opportunities offered by a European free market of more than 320 million customers. Our new site in Ireland gives us increased manufacturing capability and another product delivery point to meet the needs of this market. Over the past year, a substantial investment in our European sales force has paid off in significantly increased sales. It will also provide us with the solid base of installed customers, as well as the name and product recognition necessary to be successful in the new, United Europe.

## FIG. 3A

300

301

We have also begun looking forward to 1992. As a company which was born and has grown up in European markets, we are aware of the unique opportunities offered by a European free market of more than 320 million customers. Our new site in Ireland gives us increased manufacturing capability and another product delivery point to meet the needs of this market. Over the past year, a substantial investment in our European sales force has paid off in significantly increased sales. It will also provide us with the solid base of installed customers, as well as the name and product recognition necessary to be successful in the new, United Europe.

## FIG. 3B

300

302

310

301

*We have also begun looking forward to 1992. As a company which was born and has grown up in European markets, we are aware of the unique opportunities offered by a European free market of more than 320 million customers. Our new site in Ireland gives us increased manufacturing capability and another product delivery point to meet the needs of this market. Over the past year, a substantial investment in our European sales force has paid off in significantly increased sales. It will also provide us with the solid base of installed customers, as well as the name and product recognition necessary to be successful in the new, United Europe.*

## FIG. 3C

300

302

310

303

301

*We have also begun looking forward to 1992. As a company which was born and has grown up in European markets, we are aware of the unique opportunities offered by a European free market of more than 320 million customers. Our new site in Ireland gives us increased manufacturing capability and another product delivery point to meet the needs of this market. Over the past year, a substantial investment in our European sales force has paid off in significantly increased sales. It will also provide us with the solid base of installed customers, as well as the name and product recognition necessary to be successful in the new, United Europe.*

## FIG. 3D

350

*We have also begun looking forward to 1992. As a company which was born and has grown up in European markets, we are aware of the unique opportunities offered by a European free market of more than 320 million customers. Our new site in Ireland gives us increased manufacturing capability and another product delivery point to meet the needs of this market. Over the past year, a substantial investment in our European sales force has paid off in significantly increased sales. It will also provide us with the solid base of installed customers, as well as the name and product recognition necessary to be successful in the new, United Europe.*

# FIG. 3E

400

```
              START

               401
        GET START AND
        END POINTS

               402
        CONVERT START AND
        END PTS TO DOC COORD.

               403
        GET DX AND DY

               404
        GET ANGLE

               405                    406
        IF                YES
        ANGLE < -45    ────────>  ADD 90 DEGREES
        DEGREES
        ?
               NO

               407                    408
        IF                YES
        ANGLE > 45     ────────>  SUBTRACT
        DEGREES                    90 DEGREES
        ?
               NO

        409
        DO ROTATE

               410
        UPDATE SCREEN

              RETURN
```

FIG. 4

500

```
        START

501 ─┐
     │
GET CURRENT
CURSOR POSITION

        502
     IF          NO
  DIFFERENT ──────────┐
 FROM PREV            │
  POSITION            │
     ?                │
                      │
    YES               │
        503           │
ERASE PREVIOUS        │
REFERENCE LINE        │
                      │
        504           │
 DRAW NEW             │
REFERENCE LINE        │
                      │
        505           │
     IS        NO     │
 MOUSE BUTTON ────────┘
    UP
     ?
    YES
        506
ERASE LINE DRAWN

     RETURN
     COORD'S
```

FIG. 5